# EUROPEAN PATENT SPECIFICATION

(11) **EP 3 146 580 B1**
(45) Date of publication and mention of the grant of the patent: **17.04.2019**
(21) Application number: 15796033.7
(22) Date of filing: 22.05.2015
(51) Int. Cl.: H01M 6/40, H02J 7/02, H01M 10/46, H01G 11/14, H01G 11/82, H01G 11/84, H01M 4/52, H01M 10/30, H02J 50/10

(54) **RECHARGEABLE ELECTRIC BATTERY AND METHOD FOR MANUFACTURING A RECHARGEABLE ELECTRIC BATTERY**
WIEDERAUFLADBARE ELEKTRISCHE BATTERIE UND VERFAHREN ZUR HERSTELLUNG DER WIEDERAUFLADBAREN ELEKTRISCHEN BATTERIE
BATTERIE ÉLECTRIQUE RECHARGEABLE ET PROCÉDÉ DE FABRICATION D'UNE BATTERIE ÉLECTRIQUE RECHARGEABLE

(30) Priority: 23.05.2014 FI 20145468
(43) Date of publication of application: 29.03.2017
(73) Proprietor: Elcoflex OY, 90440 Kempele (FI)
(72) Inventor: TARVAINEN, Timo, FI-90440 Kempele (FI); PAAVOLA, Juho, FI-90440 Kempele (FI); PELTONIEMI, Timo, FI-90440 Kempele (FI)
(74) Representative: Berggren Oy, Helsinki & Oulu
(86) International application number: PCT/FI2015/050352
(87) International publication number: WO 2015/177410

(56) References cited:
- EP-A1- 2 256 670
- EP-A1- 2 256 670
- US-A1- 2009 010 462
- US-A1- 2009 307 896
- US-A1- 2013 175 982
- US-A1- 2014 117 928
- US-A1- 2014 117 928

## Description

The object of the invention is a method for the manufacture of a rechargeable, flexible electric battery. Further, the object of the invention is also an electric battery manufactured using the method. In the electric battery of the invention there occurs both a primary and secondary chemical reaction.

### Prior art

In a conventional circuit board there is provided at least on the one surface of the circuit board substrate a laminated metal foil covering the whole surface. A conventional way to manufacture such a circuit board of a laminate is to use the etching method, in which the conductive metal remaining on the circuit board is protected for the duration of etching with a material enduring etching and patterned in accordance with the layout to be manufactured. The metal remaining unprotected is removed using a chemical engraving process. The metal foil can be, for example, copper laminate.

So-called printable electronics can be used in the manufacture of electric circuit entities. In the manufacturing method the printing plate or ink material in the printing plate touches and grips to the material functioning as bed. An electrically insulating material is used as the bed, on top of which the desired circuit entities are produced by printing. Electrically functional materials, liquid or powdery, are available for the manufacture of electrically conductive, insulating, semiconducting and optical circuit elements. In addition to the printing of the material, also different films, which may be insulants or conductive can be glued to the structure.

In flexible circuit board structures either a polyimide-based film (PI) or polyester-based film (PET) or polyether sulphone film (PES) is generally used as the ductile substrate. The polyimide film withstands temperatures of over 300°C. Some polyimide trademarks are Kapton®, Apical® and Upilex®. Polyester-based films withstand temperatures of approximately 100°C. Examples of polyester-based trademarks are Mylar® and Melinex®.

US 2014/0117928 depict a rechargeable film-battery module on a flexible printed circuit board configured to be charged wirelessly. On the flexible circuit board outside the film-battery module is also located a wireless charging module and an antenna that are printed on the flexible printed circuit board. The wireless charging module is electrically connected to the film-battery module.

EP 2256670 depicts an IC card having an individual secondary thin-film battery installed on it for storing electric power installed on the IC card. The IC card includes also an antenna coil outside the secondary thin-film battery for inducing electric power by electromagnetic induction that can be stored to the individual secondary thin-film battery.

The roll-to-roll manufacturing method is used in the manufacture of flexible circuit boards, in which method film-type circuit board material is processed as long bands, which have been rolled onto coils. The roll-to-roll manufacturing technique is well suited to be used in case of large manufacturing batches.

Also different batteries and accumulators have been manufactured onto flexible circuit board films. The main part of batteries printed onto circuit board films is based on zinc (Zn) or manganese oxide (MnO₂) materials or lithium-based structures.

Electric batteries based on zinc or manganese oxide materials have been manufactured using the roll-to-roll manufacturing method. However, a problem with the manufacture of such electric batteries are both the printability characteristics of the materials used in them and the allocation of the separating layer or film needed between the electrodes of the battery. Because of these problems, it has not been possible to get the yield of electric batteries produced using the roll-to-roll manufacturing method to a satisfactory level.

Probable applications of a flexible electric battery are self-adhesive labels or other elastic applications of printed electronics, to which the recharging of installed galvanic batteries is difficult to execute.

Conventionally the battery solutions implemented with the technique described above are usually disposable (primary cell). In certain applications, they have been used to replace individual button-cell batteries.

The nickel-iron accumulator (NiFe) once patented by Edison was used in vehicles until the 1970's, but nowadays it is mainly used as energy storage for solar panels. Edison's accumulator has a nickel(III) hydroxide cathode (Ni(OH)₂) and an iron oxide anode (Fe₃O₄). Potassium hydroxide (KOH) can be used as electrolyte. An Edison-type accumulator has a short charging time, which is well suited for electric cars. However, the accumulators are of a very big size in relation to the charge that can be charged to them.

When the charge of an Edison-type electric battery has discharged, the battery is usually removed from the object of use, if it is a disposable device entity, to which the battery is attached. Because the Edison-type electric battery runs down fairly quickly, the in many ways superior electric battery technology cannot be used without a recharge possibility.

Probable applications of flexible electric batteries are self-adhesive labels or other elastic applications of printed electronics, the galvanic recharge of which is difficult to execute also in the Edison accumulator.

### Objectives of the invention

It is an objective of the invention to present a rechargeable, flexible electric battery, super-capacitor or accumulator executable with printing technology.

The objectives of the invention are achieved with a battery, accumulator or super-capacitor, which is manufactured with the roll-to-roll technology by making use of different materials suitable for the printing of an iron-nickel accumulator. In connection with the manufacture of the material layers for an electric battery or super-capacitor, a spiral double-acting coil is also manufactured around the battery, by means of which the battery can be charged wirelessly. The coil is made either in connection with the cathode or anode layer in the same process step.

It is an advantage of the invention that the flexible electric battery or super-capacitor can be recharged innumerable times. If the application is, for example, a self-adhesive label, it will not become useless after the charge of the electric battery or super-capacitor has discharged, because it is rechargeable with a wireless charging device.

It is a further advantage of the invention that a coil can be provided around the electric battery or super-capacitor, which can be used in the wireless recharging process of the electric battery or super-capacitor.

In addition it is an advantage of the invention that the coil prepared around the electric battery or super-capacitor can also be used as NFC antenna (Near Field Communication) for the identification of different devices using RFID technology (Radio Frequency Identification) and data transfer for very short distances, at most of a few centimetres, on a narrow data transfer band. The NFC device can function both as a reader device and identifier.

It is a further advantage of the invention that the insulating net separating the cathode and anode of the electric battery from each other can be printed reliably onto the cathode material by using printing technology.

It is a further advantage of the invention that the materials for the electric battery are recyclable.

In addition it is an advantage of the invention that the electric battery has a very long service life (20 - 50 years).

It is a further advantage of the invention that the electric battery has a good endurance of overcharge.

It is a further advantage of the invention that the electric battery withstands complete discharge.

It is a further advantage of the invention that the electric battery withstands freezing.

It is a further advantage of the invention that the electric battery is hermetic.

It is yet a further advantage of the invention that the materials for the electric battery are basic materials easily available.

It is characteristic of a flexible electric battery of the invention manufactured with a roll-to-roll manufacturing equipment that the electric battery comprises a spiral coil around an electrode of the electric battery, which spiral coil has been manufactured from the same flexible metal foil that supports one of the electrodes of the electric battery, the electric battery having been configured to be charged wirelessly and/or to be connected to a wireless data transfer system by using the spiral coil.

It is characteristic of the roll-to-roll manufacturing method of a flexible electric battery of the invention that a spiral coil of the electric battery is manufactured around an electrode of the electric battery by etching the spiral coil from the same metal foil supporting a cathode electrode or a metal film supporting an anode electrode of the electric battery so that the electric battery can be recharged wirelessly and/or connected to a wireless data transfer system using the spiral coil of the electric battery.

Some advantageous embodiments of the invention are presented in the dependent claims.

The basic idea of the invention is as follows: An electric battery or super-capacitor of the invention is manufactured using roll-to-roll technology. In the electric battery of the invention both primary and secondary reactions occur as a chemical reaction.

In connection with the manufacturing process of the cathode, anode and necessary insulating layers of the electric battery, also a double-acting coil is prepared in connection with the electric battery, the coil being used both in the wireless recharging of the electric battery of the invention and the management of the data transfer needs of the electronic component connected to the electric battery. Advantageously on the side facing the outer surface of the cathode or anode of the electric battery there may be a material layer of high permeability, such as a ferrite layer, which is used for shaping the electro-magnetic field generated in wireless charging or data transfer of the object of use, to which the electric battery of the invention has been mounted.

Also in case of a super-capacitor its electrodes and insulating materials are grown advantageously by printing onto a suitable material film using the roll-to-roll printing technology.

The manufacture of an electric battery of the invention will next be explained in detail. The manufacturing steps used in the manufacture of a super-capacitor have not been illustrated separately. In connection with the specification of the electric battery reference is made to the enclosed drawings, in which
Figures 1a - 1g are exemplary illustrations of a flexible electric battery of the invention according to manufacturing steps, observed in the direction of the cathode and the cross-sections of these;
Figure 2 is an exemplary flowchart of the main manufacturing steps of the cathode of the electric battery of the invention; and
Figure 3 is an exemplary flowchart of the main manufacturing steps of the anode of the electric battery of the invention and the final assembly steps of the electric battery.

The embodiments in the next specification are only exemplary and one skilled in the art may execute the basic inventional idea also in some other way than the one depicted in the specification. Although reference may be made to an embodiment or embodiments in several places of the specification, this does not mean that the reference would only be applied to one depicted embodiment or that the depicted feature would only be usable in one depicted embodiment. Individual features of two or more embodiments may be combined and thus achieve new embodiments of the invention.

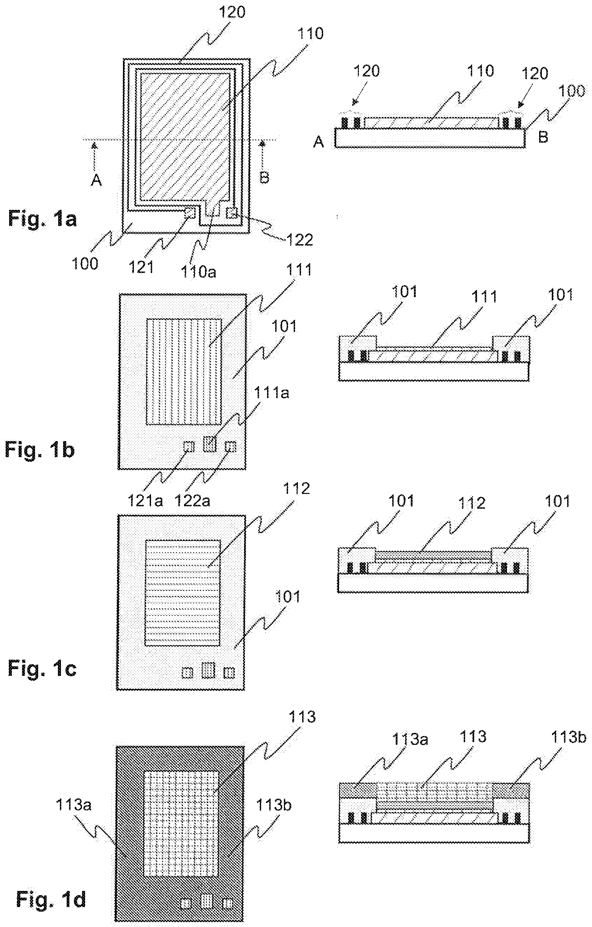

**Figures 1a** - **1g** are exemplary illustrations of the manufacture of a flexible electric battery 10 of the invention using the roll-to-roll manufacturing process. The materials used in the electric battery 10 of the invention make possible the primary and secondary chemical reactions needed in the discharge and recharge of an electric charge. During the manufacture of an electric battery the semi-finished cathode and anode products are driven several times through the devices in the manufacturing line. The various material layers shown in Figures 1a - 1g can be a result of one or more processing transactions of the same material in the roll-to-roll equipment.

The manufacture of an electric battery according to the first embodiment of the invention is explained in Figures 1a - 1g. In this advantageous embodiment the cathode of an electric battery, such as an accumulator or super-capacitor, and the coil surrounding it have been made by etching from a copper foil of Cu/PET laminate (Figure 1a).

In a second advantageous embodiment of the invention the coil in connection with the electric battery has been manufactured to the connection of the anode from a metal plate used in the manufacture of the anode.

However, the invention is not restricted to a solution based on Cu/PET foil, but the manufacture of the electric battery according to the second embodiment of the invention and the antenna connectable to it can alternatively be made by originally using pure copper foil as follows. In this manufacturing method there is no need for separate work phases for connecting to each other the components of two separate conductive layers of a flexible circuit board, on which the electric battery of the invention, such as an accumulator or super-capacitor is located, through the insulating layer by using electrically conductive vias.

The electric vias possibly needed are manufactured onto the first surface of the copper foil acting as the bed for the electric battery by printing insulating and conductive layers. The first surface of the copper foil is part of the outer surface of the electric battery of the invention facing the cathode. The layers printed onto the first surface are patterned to suit the purpose of use. The first patterned layer to be printed onto the first surface of the copper foil is an insulation layer. The insulation layer is left with openings at the electrical vias to be manufactured. In the next processing steps, one or several conductive, semi-conductive or insulating material layers can be printed onto the patterned first insulation layer so that the desired circuit entity can be provided onto the side of the outer surface of the cathode of the electric battery.

The necessary electrical vias are advantageously implemented by pressing conductive material into the openings patterned to the first insulation layer. The conductive material pressed to the openings achieves an electrical contact from the printed conductive layer to the copper foil acting as bed for the cathode. Several layers of patterned insulating and conductive layers can be superimposed.

When all material layers to be provided onto the first surface of the copper foil have been printed, the side of the cathode of the electric battery made by printing is advantageously attached to an appropriate support film. The support film can contain openings, through which an electrical connection can be made either to the metal foil or conductive layer of the electric battery.

After this the copper cathode of the electric battery of the invention and the coil around the electric battery are patterned onto the other still unprocessed side of the copper foil advantageously by etching. After the etching of the cathode and coil, material layers according to Figures 1a - 1g can advantageously be printed onto the cathode electrode of the electric battery and the coil made by etching to prepare the cathode of the electric battery 10 and the insulating net insulating the cathode from the anode.

It is an advantage of the electric battery according to the second embodiment that it is possible to make the contact of the cathode either above and/or below the copper foil belonging to the cathode. In addition the connection of the connecting points of the cathode, anode and coil to an outer electrical circuit can be made by printing the conductors from the connecting points to the outer electrical circuit.

**In** **Figure 1a** there is illustrated the manufacture of a cathode of an electric battery according to the first embodiment of the invention by etching from Cu/PET laminate. Both the cathode electrode 110 of the electric battery and the surrounding coil have been etched from a copper foil of Cu/PET laminate.

In Figure 1a the cathode electrode of the electric battery 10 and the exemplary coil 120 are shown both from above and as a cross-section in the direction A-B. For the sake of clarification of Figures 1a - 1g and for facilitating the specification the thicknesses of the material layers of the cross-section A-B are shown in an exemplary way in all Figures so that they can be easily distinguished from each other.

The thickness of the copper foil of the Cu/PET laminate used is advantageously approximately 18 µm. The thickness of the PET film is approximately 50 µm.

An exemplary cathode electrode 110 is in Figure 1a shown principally in the form of a rectangle. In Figure 1a the cathode electrode 110 also has a downwards extending projection 110a, from which the cathode of the finished electric battery 10 can be electrically connected to an outer electrical circuit (not shown in Figures 1a - 1g). It is obvious for one skilled in the art that the geometric shape of the cathode electrode 110 can deviate from the example depicted in Figure 1a.

The exemplary coil 120 in Figure 1a has two laps. The coupling points of the coil are marked with references 121 and 122. The coil 120 is connectable to an external electric circuit arrangement from the coupling points. However, the coil structure 120 of the invention is not restricted to the shown geometrical shape or the depicted two laps, but the shape of the coil can be chosen to suit the application and, depending on the application, the coil may also have several laps.

**In** **Figure 1b** there is illustrated a cathode electrode after one or several insulating layers 101 have been printed on top of the laps of the coil 120 and the edge areas of the copper cathode electrode 110. No insulating material has been printed on top of the coupling area 110a of the cathode electrode or the coupling points 121 and 122 of the coil. The insulating material used endures the alkaline electrolyte solution used.

This above-mentioned cathode electrode 110 of the electric battery remaining uninsulated is next coated electrolytically with a nickel layer 111, the thickness of which is advantageously about 4 µm. Also the coupling area 110a of the cathode and the coupling points 121 and 122 of the coil are advantageously coated with nickel (references 111a, 121a and 122a).

**In** **Figure 1c** there is shown the cathode electrode of the electric battery 10 of the invention after the material layer 112 consisting advantageously of nickel(III) hydroxide (Ni(OH)₂ and carbon has been printed onto the area of the cathode electrode with the nickel coating 111. Instead of carbon, also other conductive materials enduring an alkaline solution may be used in connection with the nickel(III) hydroxide.

No nickel(III) hydroxide is dispensed on top of the nickel-plated coupling area 111a of the cathode electrode and the nickel-plated coupling points 121 and 122 of the coil. In an advantageous embodiment they are coated with gold so that the joint to be made to them would be as reliable as possible.

In an advantageous embodiment of the invention an electrolytic solution is dispensed onto the nickel-plated surface 111 of the cathode electrode so that the water in the solution reacts with nickel and generates a nickel(III) oxide layer to the cathode.

**In** **Figure 1d** there is illustrated the cathode of the electric battery 10 of the invention after two insulating layers 113 and 113a and 113b different from each other have been printed onto the cathode electrode. The insulating layers 113a and 113b on the outer edges of the cathode electrode are solid insulant. At the actual cathode electrode 110 a gridded structure 113 of the insulant has been printed onto the nickel(III) hydroxide layer 112, which in the electric battery of the invention functions as the element separating the cathode and anode.

The height of the separating net 113 to be provided is determined by the number of successive printing times used in the manufacture of the net. The insulant for the separating net 113 has been chosen so that it does not dissolve or break in the electrolytic solution used in the electric battery.

No insulating material has been printed onto the coupling area 111a of the cathode electrode 110 or the coupling points 121a and 122a of the coil at this processing step.

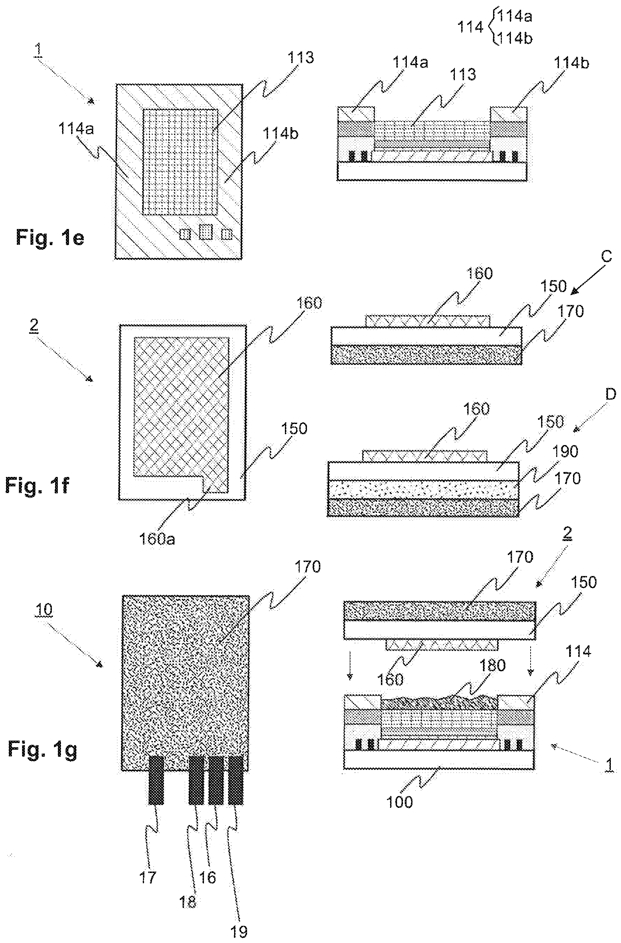

**Figure 1e** illustrates an adhesive layer 114, which in the cross-sectional view comprises the sections 114a and 114b, printed on the outer edges of the cathode electrode. No adhesive layer has been printed onto the coupling area 110a of the cathode electrode or the coupling points 121a and 122a of the coil in this processing step.

After the printing of the adhesive layer the semi-finished cathode 1 of the battery 10 of the invention is ready to be joined with the semi-finished anode.

**In** **Figure 1f** there are illustrated some advantageous embodiments of the semi-finished anode of the electric battery 10 of the invention. The anode electrode 160 is prepared advantageously by printing a mixture of iron oxide (Fe₃O₄) and carbon onto the support film 150. Instead of carbon also other conductive materials withstanding an alkaline solution can be used in connection with iron oxide. The support film can be a PET film, metal coated PET film or iron film. An exemplary anode electrode 160 is depicted mainly in the form of a rectangle in Figure 1f. The anode electrode 160 in Figure 1f also has a downwards extending projection 160a, from which the anode of a finished electric battery 10 can be electrically connected to an external electric circuit (not shown in Figures 1a - 1g). It is obvious for one skilled in the art that the geometric shape of the anode electrode 160 can deviate from the example in Figure 1f.

Openings are prepared to the support film 150 and 170 of the anode advantageously by etching to the places, which become opposed with the coupling area 110a of the cathode and the coupling points 121 and 122 of the coil.

Cross-sectional views in Figure 1f present two advantageous alternatives for the support film structure of the anode (options C and D).

In the alternative C the metal foil 170 has been laminated onto the outer surface of the PET film acting as the support film.

In the alternative D the support film has advantageously three layers. Between the PET film 150 against the anode electrode and the metal foil 170 forming the outermost layer there is the layer 190 of ferromagnetic material, for example ferrite, on a material layer of approximately 300 µm. This ferromagnetic layer 190 is used for forming the magnetic flux originated by or applied to the coil 120 so that the recharging of the electric battery 10 is made more effective. When the coil is used in data transfer on the ferromagnetic material layer 190, this material layer 190 affects the data transfer direction used both in transmission and reception.

**In** **Figure 1g** there is shown how the electric battery 10 of the invention is assembled from the semi-finished cathode 1 and semi-finished anode 2.

Before the semi-finished anode 2 is connected to the semi-finished cathode 1, potassium hydroxide (KOH) 180 is advantageously printed on the insulation net 113 of the cathode electrode. When the electrolyte 180 has been dispensed onto the cathode electrode, the anode according to Figure 1f is pressed onto the cathode. The cathode and anode are glued to each other by the adhesive layer 114.

Also other metals can be used as electrodes for the electric battery and also some other alkaline solution can be used as electrolyte, but in this case the voltage and charging capacity of the electric battery to be prepared change.

After the semi-finished cathode 1 and the semi-finished anode 2 have been glued together, the result is a prepared electric battery 10, which is hermetically closed by two metal films both from the side of the cathode and anode.

The electric couplings of the electric battery 10 of the invention can advantageously be made using crimped joints extending through the structure. The reference 16 illustrates the crimp joint perforating the coupling area 111a of the cathode. The reference 17 illustrates the crimp joint perforating the coupling area 160a of the anode. The references 18 and 19 illustrate the crimp joints perforating the coupling points 121a and 122a of the coil 120. With the connectors 16 and 17 the electric battery can be coupled both with the control circuit in connection with the coil 120 and the electronic circuit supplied by the electronic battery. Through the connectors 18 and 19 the coil 120 can be coupled both with the charging circuit of the electric battery and NFC electronics. The coil 120 of the invention can thus advantageously be used both in the charging of the electric battery and as data transfer equipment for the electronic circuit connected to the electric battery.

In the manufacturing method of the invention described above a flexible electric battery or super-capacitor can be produced either onto a Cu/PET laminate or pure copper foil using the roll-to-roll technology. With the manufacturing method of the invention it is possible to achieve a rechargeable electric battery or super-capacitor, the thickness of which is approximately 0.1 - 0.2 mm. The manufacturing method of the invention can be used for the cost-effective manufacture of rechargeable electric batteries and super-capacitors for various RFID and NFC circuit applications.

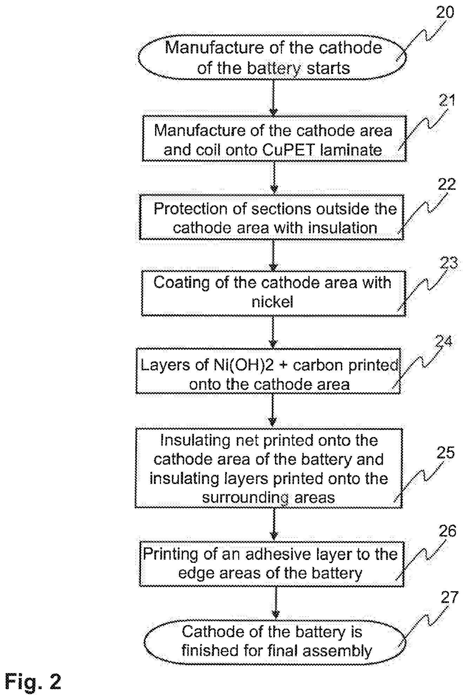

**Figure 2** is an exemplary flowchart of the main steps for the method for manufacturing the cathode electrode of an advantageous embodiment of the electric battery of the invention shown in Figures 1a - 1e. In connection with the explanation of the flowchart in Figure 2 the reference numbers presented more closely in Figures 1a - 1gare used as clarifying reference numbers.

The actual manufacturing steps for the cathode of the rechargeable flexible electric battery 10 are preceded by step 20. In step 20 either a Cu/PET laminate or pure metal foil is ready in the roll-to-roll manufacturing equipment, the metal foil advantageously being a copper foil with no separate support film attached. Later in the specification the manufacturing process of the cathode electrode is depicted by using the Cu/PET laminate.

In step 21 a copper electrode 110 and coil 120 with its coupling points 110a, 121 and 122 are manufactured by etching onto the Cu/PET laminate.

In step 22 the edge areas of the cathode electrode of the electric battery 10 under manufacture are coated with insulation 101 at one or several printing rounds. The number of printing rounds can be used for determining the thickness of the insulating layer to be generated. The actual cathode electrode, coupling point 110a of the cathode electrode and coupling points 121 and 122 of the coil 120 are not coated with the insulation 101.

In step 23 the uninsulated copper foil of the cathode electrode 110 and the coupling points 110a, 121 and 122 are coated advantageously electrolytically with a nickel layer 111, 111a, 121a and 122a of approximately 4 µm at one or several manufacturing times.

In step 24 a nickel(III) hydroxide layer 112 is printed onto the nickel-plated cathode electrode at one or several printing times.

Step 25 comprises advantageously several printing times with an insulation paste. One or several uniform insulating layers 113a and 113b are printed onto the edges of the cathode electrode. So many insulating layers are printed that a sufficient volume is generated at the actual cathode electrode for the electrolyte to be used.

Additionally in step 25 an insulating net 113 of insulating material is printed onto the nickel(III) hydroxide layer 112 printed in step 24. In a manner described above insulating paste is printed all the way to the edges of the cathode electrode, but in the active area of the battery the insulating layer is advantageously netlike. The thickness of the insulating net 113 is determined by how many printing times are used for the manufacture of the net. The material of the insulating net 113 does not dissolve or crack to pieces because of the electrolyte 118 to be added in the later manufacturing steps.

In step 25 the first printing time of the insulating paste is advantageously uniform on the edges 113a and 113b and netlike 113 in the middle. During the next printing times the insulating layers 113a and 113b still have uniform edges, but in the areas of the insulating net 113 they are only points, which attach to the knot points of the insulating net 113 manufactured during the first printing time. Thus the insulating points can be made to attach to certain places of the insulating net so that more volume is achieved for the electrolyte used, when the insulating net 113 is in its entirety printed advantageously only one time.

Thus the electric battery 10 of the invention does not need a conventionally needed separate separator film, paper or other porous film, which cannot be added printing-technically, but which has to be added between the cathode electrode and anode electrode.

After the printing times of step 25 have been carried out, an adhesive layer 114 is printed at one or several printing times in step 26.

The semi-finished cathode 1 of the electric battery 10 is ready for final assembly after the printing time of the adhesive layer.

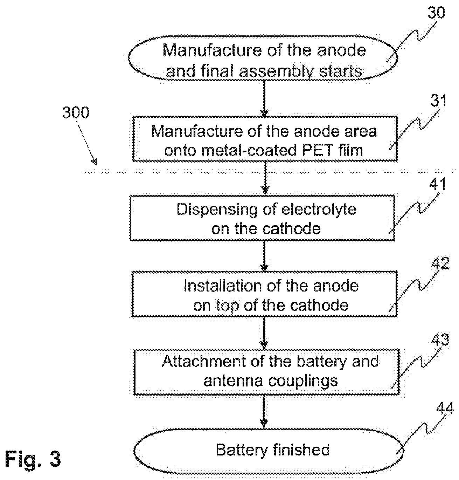

**Figure 3** illustrates an exemplary flowchart of the main steps of the method for the manufacture of an anode electrode of a first embodiment of the electric battery of the invention and the main steps of the final assembly of the electric battery 10.

The actual manufacturing steps of the anode of the rechargeable flexible electric battery 10 are preceded by step 30. In step 30 the roll-to-roll manufacturing equipment has ready either the metal/PET support film 150 or 170 or metal/ferrite/PET support film 150, 190, 170.

In step 31 a material layer 160 comprising iron oxide and carbon is printed onto the support film used so that the geometrical shape and size of the printed layer correspond to the geometrical shape and size of the cathode. Also the coupling area 160a of the anode is formed of the same material mixture.

After the step 31 the semi-finished anode 2 can be connected to the semi-finished cathode 1.

The final assembly of the electric battery of the invention is initiated in step 41, in which the electrolyte 180 used is dispensed into the cavities formed by the insulating net 113 in the semi-finished cathode 1. The electrolyte 180 is advantageously potassium hydroxide (KOH). The electrolyte 180 is also dispensed onto the cathode advantageously as one work step of the roll-to-roll manufacturing process.

After the electrolyte has been dispensed into the semi-finished cathode 1, the semi-finished anode 2 is connected to it in step 42 so that the anode electrode 160 consisting of iron oxide and carbon presses against the insulating net 113 on the cathode, filled with electrolyte. The adhesive layer 114 encircling the outer edges of the semi-finished cathode 1 presses simultaneously against the PET film 150, which has been left pure and which is located on the outer edges of the semi-finished anode 2, thus closing the outer edges of the battery 10 hermetically.

When the semi-finished cathode 1 and the semi-finished anode 2 have been attached to each other, a hermetically closed electric battery 10 has been achieved, in which the outer surfaces of both the cathode and anode are protected by the metal films.

In step 43 electrical connectors 16, 17, 18 and 19 are connected to the manufactured electric battery. The electrical connections can advantageously be implemented by crimped joints through the edge area of the electric battery, to which the coupling points 111a, 121a, 122a and 160a have been made during the manufacturing process described. When using crimped joints, holes have been manufactured at the place of the connectors 16, 18 and 19 before the implementation of the crimp joint, for example, during the manufacture of the semi-finished anode 2.

It is obvious for one skilled in the art that the manufacturing process according to the first embodiment of the invention shown in the flowcharts in Figures 2 and 3 can be modified so that the coil included in the electric battery of the invention is provided in connection with the anode of the battery. Also the printing of the insulating net 113 can be made onto the anode electrode 160 instead of the cathode electrode.

Some embodiments of a rechargeable and flexible electric battery according to the invention and the manufacturing method of these have been described above. The invention is not restricted to the described solutions, but the inventional idea may be applied in several ways within the limits set by the patent claims.

## Claims

1. A rechargeable flexible electric battery (10), electric elements of which have been made by using a roll-to-roll manufacturing equipment, **characterized in that** the electric battery (10) comprises a spiral coil (120) around an electrode of the electric battery (10), which spiral coil (120) has been manufactured from the same flexible metal foil that supports one of the electrodes of the electric battery (10), the electric battery (10) having been configured to be charged wirelessly and/or to be connected to a wireless data transfer system by using the spiral coil (120).

2. The flexible electric battery (10) according to claim 1, **characterized in that** the coil (120) is made of a metal foil used in the manufacture of a cathode electrode (110) of the electric battery (10).

3. The flexible electric battery (10) according to claim 1, **characterized in that** the coil has been manufactured of a metal foil used in the manufacture of an anode electrode (160) of the electric battery (10).

4. The flexible electric battery (10) according to claim 2 or 3, **characterized in that** the coil (120) is made of the said metal foil by etching.

5. The flexible electric battery (10) according to claim 1, **characterized in that** a cathode electrode (110) of the electric battery (10) comprises a nickel(III) hydroxide layer (112), an anode electrode (160) of the electric battery (10) comprises an iron oxide layer (160) and electrolyte (180) is potassium hydroxide.

6. The flexible electric battery (10) according to claim 5, **characterized in that** the cathode (110) and the anode (160) are separated from each other by a printed insulating net (113), to which the electrolyte (180) of the electric battery (10) is dispensed.

7. The flexible electric battery (10) according to claims 1-6, **characterized in that** the electric battery (10) is an accumulator.

8. The flexible electric battery (10) according to claims 1-4, **characterized in that** the electric battery (10) is a super-capacitor.

9. A method for the manufacture of a rechargeable, flexible electric battery (10), in which the elements for the electric battery are manufactured using a roll-to-roll manufacturing equipment, **characterized in that** a spiral coil (120) of the electric battery (10) is manufactured around an electrode (110, 160) of the electric battery. (10) by etching the spiral coil (102) from the same metal foil supporting a cathode electrode (110) or a metal film (170) supporting an anode electrode (160) of the electric battery (10) so that the electric battery (10) can be recharged wirelessly and/or connected to a wireless data transfer system using the spiral coil (120) of the electric battery (10).

10. The manufacturing method according to claim 9, **characterized in that** an insulating net (113) is printed onto the cathode (112) of the electric battery, to which an electrolyte (180) between the cathode and anode is dispensed.

11. The manufacturing method according to claim 9, **characterized in that** an insulating net (113) is printed onto the anode (160) of the electric battery, to which an electrolyte (180) is dispensed.

12. The manufacturing method according to claim 10 or 11, **characterized in that** also the electrolyte (180) is dispensed onto the insulating net (113) separating the cathode and anode in the roll-to-roll manufacturing process.

## Patentansprüche

1. Wiederaufladbare flexible elektrische Batterie (10), deren elektrische Elemente durch Verwendung einer Rolle-zu-Rolle-Produktionsanlage angefertigt wurden, **dadurch gekennzeichnet, dass** die elektrische Batterie (10) eine Spiralspule (120) um eine Elektrode der elektrischen Batterie (10) herum umfasst, wobei die Spiralspule (120) aus der gleichen flexiblen Metallfolie hergestellt wurde, die eine der Elektroden der elektrischen Batterie (10) trägt, wobei die elektrische Batterie (10) konfiguriert wurde, unter Verwendung der Spiralspule (120) drahtlos geladen zu werden und/oder mit einem drahtlosen Datenübertragungssystem verbunden zu werden.

2. Flexible elektrische Batterie (10) nach Anspruch 1, **dadurch gekennzeichnet, dass** die Spule (120) aus einer Metallfolie angefertigt ist, die beim Herstellen einer kathodischen Elektrode (110) der elektrischen Batterie (10) verwendet wird.

3. Flexible elektrische Batterie (10) nach Anspruch 1, **dadurch gekennzeichnet, dass** die Spule aus einer Metallfolie hergestellt wurde, die beim Herstellen einer anodischen Elektrode (160) der elektrischen Batterie (10) verwendet wird.

4. Flexible elektrische Batterie (10) nach Anspruch 2 oder 3, **dadurch gekennzeichnet, dass** die Spule (120) durch Ätzen der Metallfolie angefertigt wird.

5. Flexible elektrische Batterie (10) nach Anspruch 1, **dadurch gekennzeichnet, dass** eine kathodische Elektrode (110) der elektrischen Batterie (10) eine Nickel(III)-hydroxid-Schicht (112) umfasst, eine anodische Elektrode (160) der elektrischen Batterie (10) eine Eisenoxid-Schicht (160) umfasst und ein Elektrolyt (180) Kaliumhydroxid ist.

6. Flexible elektrische Batterie (10) nach Anspruch 5, **dadurch gekennzeichnet, dass** die Kathode (110) und die Anode (160) durch ein gedrucktes Isoliernetz (113) voneinander getrennt sind, in welchem der Elektrolyt (180) der elektrischen Batterie (10) dispensiert ist.

7. Flexible elektrische Batterie (10) nach den Ansprüchen 1 bis 6, **dadurch gekennzeichnet, dass** die elektrische Batterie (10) ein Akkumulator ist.

8. Flexible elektrische Batterie (10) nach den Ansprüchen 1 bis 4, **dadurch gekennzeichnet, dass** die elektrische Batterie (10) ein Superkondensator ist.

9. Verfahren für die Herstellung einer wiederaufladbaren flexiblen elektrischen Batterie (10), in der die Elemente für die elektrische Batterie unter Verwendung einer Rolle-zu-Rolle-Produktionsanlage hergestellt werden, **dadurch gekennzeichnet, dass** eine Spiralspule (120) der elektrischen Batterie (10) um eine Elektrode (110, 160) der elektrischen Batterie (10) herum durch Ätzen der Spiralspule (102) aus der gleichen Metallfolie, die eine kathodische Elektrode (110) trägt, oder aus einem Metallfilm (170) hergestellt wird, der eine anodische Elektrode (160) der elektrischen Batterie (10) trägt, so dass die elektrische Batterie (10) unter Verwendung der Spiralspule (120) der elektrischen Batterie (10) drahtlos wiederaufgeladen werden kann und/oder mit einem drahtlosen Datenübertragungssystem verbunden werden kann.

10. Herstellungsverfahren nach Anspruch 9, **dadurch gekennzeichnet, dass** ein Isoliernetz (113) auf der Kathode (112) der elektrischen Batterie gedruckt wird, in welchem ein Elektrolyt (180) zwischen der Kathode und der Anode dispensiert ist.

11. Herstellungsverfahren nach Anspruch 9, **dadurch gekennzeichnet, dass** ein Isoliernetz (113) auf der Anode (160) der elektrischen Batterie gedruckt wird, in welchem ein Elektrolyt (180) dispensiert ist.

12. Herstellungsverfahren nach Anspruch 10 oder 11, **dadurch gekennzeichnet, dass** der Elektrolyt (180) auch auf dem Isoliernetz (113) dispensiert wird, das die Kathode und die Anode bei dem Rolle-zu-Rolle-Herstellungsprozess trennt.

## Revendications

1. Batterie électrique souple rechargeable (10), dont des éléments électriques ont été fabriqués à l'aide d'un équipement de fabrication rouleau à rouleau, **caractérisée en ce que** la batterie électrique (10) comprend une bobine spiralée (120) autour d'une électrode de la batterie électrique (10), laquelle bobine spiralée (120) a été fabriquée à partir de la même feuille métallique souple qui supporte l'une des électrodes de la batterie électrique (10), la batterie électrique (10) ayant été conçue pour être chargée d'une manière sans fil et/ou pour être connectée à un système de transfert de données sans fil en utilisant la bobine spiralée (120).

2. Batterie électrique souple (10) selon la revendication 1, **caractérisée en ce que** la bobine (120) est faite d'une feuille métallique utilisée dans la fabrication d'une électrode cathodique (110) de la batterie électrique (10).

3. Batterie électrique souple (10) selon la revendication 1, **caractérisée en ce que** la bobine a été fabriquée d'une feuille métallique utilisée dans la fabrication d'une électrode anodique (160) de la batterie électrique (10).

4. Batterie électrique souple (10) selon la revendication 2 ou 3, **caractérisée en ce que** la bobine (120) est faite de ladite feuille métallique par gravure.

5. Batterie électrique souple (10) selon la revendication 1, **caractérisée en ce qu'**une électrode cathodique (110) de la batterie électrique (10) comprend une couche d'hydroxyde de nickel (III) (112), une électrode anodique (160) de la batterie électrique (10) comprend une couche d'oxyde de fer (160) et l'électrolyte (180) est l'hydroxyde de potassium.

6. Batterie électrique souple (10) selon la revendication 5, **caractérisée en ce que** la cathode (110) et l'anode (160) sont séparées l'une de l'autre par un filet isolant imprimé (113), sur lequel est distribué l'électrolyte (180) de la batterie électrique (10).

7. Batterie électrique souple (10) selon les revendications 1 à 6, **caractérisée en ce que** la batterie électrique (10) est un accumulateur.

8. Batterie électrique souple (10) selon les revendications 1 à 4, **caractérisée en ce que** la batterie électrique (10) est un supercondensateur.

9. Procédé pour la fabrication d'une batterie électrique souple rechargeable (10), dans lequel les éléments pour la batterie électrique sont fabriqués à l'aide d'un équipement de fabrication rouleau à rouleau, **caractérisé en ce qu'**une bobine spiralée (120) de la batterie électrique (10) est fabriquée autour d'une électrode (110, 160) de la batterie électrique (10) par gravure de la bobine spiralée (102) à partir de la même feuille métallique supportant une électrode cathodique (110) ou d'un film métallique (170) supportant une électrode anodique (160) de la batterie électrique (10) de sorte que la batterie électrique (10) puisse être rechargée d'une manière sans fil et/ou connectée à un système de transfert de données sans fil à l'aide de la bobine spiralée (120) de la batterie électrique (10).

10. Procédé de fabrication selon la revendication 9, **caractérisé en ce qu'**un filet isolant (113) est imprimé sur la cathode (112) de la batterie électrique, sur laquelle est distribué un électrolyte (180) entre la cathode et l'anode.

11. Procédé de fabrication selon la revendication 9, **caractérisé en ce qu'**un filet isolant (113) est imprimé sur l'anode (160) de la batterie électrique, sur laquelle est distribué un électrolyte (180).

12. Procédé de fabrication selon la revendication 10 ou 11, **caractérisé en ce que** l'électrolyte (180) est également distribué sur le filet isolant (113) séparant la cathode et l'anode dans le processus de fabrication rouleau à rouleau.
